# EUROPEAN PATENT APPLICATION

(11) **EP 4 772 918 A1**
(43) Date of publication of application: **08.07.2026**
(21) Application number: 24925127.3
(22) Date of filing: 15.11.2024
(51) Int. Cl.: G02B 6/38, G02B 6/36

(54) **OPTICAL FIBER CONNECTION PORT ASSEMBLY, OPTICAL FIBER COMMUNICATION DEVICE, AND OPTICAL FIBER COMMUNICATION SYSTEM**

(30) Priority: 16.10.2024 CN 202411448236
(71) Applicant: Zhejiang Chaoqian Telecommunication Technologies Co., Ltd, Taizhou, Zhejiang 317200 (CN)
(72) Inventor: DONG, Min, Taizhou, Zhejiang 317200 (CN)
(74) Representative: Botti & Ferrari S.p.A.
(86) International application number: PCT/CN2024/132164
(87) International publication number: WO 2026/081279

(57) **Abstract**

The present application relates to an optical fiber connection port assembly, wherein the optical fiber connection port assembly comprises a connection port housing and a locking member, wherein the connection port housing and the locking member together define at least a portion of a receiving portion for receiving an optical fiber connector, wherein the connection port housing includes a first locking portion for a first latching protrusion of the optical fiber connector, and the locking member includes a second locking portion for a second latching protrusion of the optical fiber connector and an unlocking action portion for the first latching protrusion of the optical fiber connector, wherein the locking member is transitionable between a lock state and an unlock state, wherein compared with the lock state, in the unlock state, the second locking portion of the locking member is remote from the receiving portion, and the unlocking action portion of the locking member is proximate to the receiving portion. The present application also relates to an optical fiber communication device and an optical fiber communication system.

## Description

### CROSS-REFERENCE TO RELATED APPLICATIONS

The present application is based on and claims priority to CN Patent Application No. 202411448236.1 filed on October 16, 2024, the disclosure of which is incorporated by reference herein in its entirety.

### TECHNICAL FIELD

The present application relates to an optical fiber connection port assembly, an optical fiber communication device and an optical fiber communication system.

### BACKGROUND ART

Optical fiber communication systems are becoming increasingly widespread, optical fiber communication systems may efficiently transmit a large amount of data over a relatively long distance using the optical fiber cable network. At present, there is a variety of optical fiber communication devices, such as fiber optic splice closures, optical routers, optical fiber switches, optical fiber transceivers and optical fiber modems. In practice, it is often necessary to insert the optical fiber cable into the optical fiber communication device or pull the optical fiber cable out from the optical fiber communication device. What is important here is to allow flexible, convenient, stable and reliable connection or disconnection between the optical fiber cable and the optical fiber communication device.

### SUMMARY OF THE INVENTION

An object of the present application is to provide an optical fiber connection port assembly, an optical fiber communication device and an optical fiber communication system, by way of which it is possible to overcome at least part of the deficiencies in the prior art.

A first aspect of the present application relates to an optical fiber connection port assembly, wherein the optical fiber connection port assembly comprises a connection port housing and a locking member, wherein the connection port housing and the locking member together define at least a portion of a receiving portion for receiving an optical fiber connector, wherein the connection port housing includes a first locking portion for a first latching protrusion of the optical fiber connector, and the locking member includes a second locking portion for a second latching protrusion of the optical fiber connector and an unlocking action portion for the first latching protrusion of the optical fiber connector, wherein the locking member is transitionable between a lock state and an unlock state, wherein compared with the lock state, in the unlock state, the second locking portion of the locking member is remote from the receiving portion, and the unlocking action portion of the locking member is proximate to the receiving portion.

According to one embodiment of the present application, the optical fiber connection port assembly is configured to allow the optical fiber connector to be inserted into the receiving portion of the optical fiber connection port assembly along an insertion direction.

According to one embodiment of the present application, in the lock state, the optical fiber connection port assembly prevents the movement of the optical fiber connector located in the receiving portion against the insertion direction; and in the unlock state, the optical fiber connection port assembly allows the movement of the optical fiber connector located in the receiving portion against the insertion direction.

According to one embodiment of the present application, the first locking portion is configured to, in the lock state, interact with the first latching protrusion of the optical fiber connector located in the receiving portion, and the second locking portion is configured to, in the lock state, interact with the second latching protrusion of the optical fiber connector located in the receiving portion.

According to one embodiment of the present application, the unlocking action portion of the locking member is configured to, in the unlock state, act on the first latching protrusion of the optical fiber connector located in the receiving portion, so that the first latching protrusion is unlatched from the first locking portion.

According to one embodiment of the present application, the second locking portion of the locking member is configured to, in the unlock state, leave the second latching protrusion of the optical fiber connector located in the receiving portion, so that the second latching protrusion is unlatched from the second locking portion.

According to one embodiment of the present application, the locking member includes an operating portion projecting outwards in the area of the unlocking action portion, wherein the locking member is transitionable from the lock state to the unlock state by pressing the operating portion.

According to one embodiment of the present application,the second locking portion and the unlocking action portion are opposite to each other in an unlocking movement direction of the locking member, wherein the locking member is transitionable from the lock state to the unlock state along the unlocking movement direction.

According to one embodiment of the present application, the locking member includes an environ portion which at least partially defines the receiving portion, wherein the environ portion includes a first section in the shape of a semi-cylindrical shell comprising the second locking portion and a second section comprising the unlocking action portion, wherein the first section and the second section together form the environ portion.

According to one embodiment of the present application,the distance between the second locking portion and the central axis of the receiving portion is smaller than the distance between the unlocking action portion and the central axis of the receiving portion.

According to one embodiment of the present application, the distance between the second locking portion and the central axis of the receiving portion corresponds to the distance between the first locking portion and the central axis of the receiving portion.

According to one embodiment of the present application, the locking member is at least partially elastic, wherein the locking member is elastically deformable from the lock state to the unlock state, and is transitionable from the unlock state to the lock state under the action of the restoring elastic force.

According to one embodiment of the present application, the locking member includes elastic arm extending in the axial direction, wherein the elastic arm is connected to the environ portion.

According to one embodiment of the present application, wherein the elastic arm is connected to the second section of the environ portion.

According to one embodiment of the present application, the connection port housing includes support portion for the elastic arm.

According to one embodiment of the present application, the locking member includes a positioning cutout, and wherein the connection port housing includes a positioning projection corresponding to the positioning cutout.

According to one embodiment of the present application, the locking member includes guide pin, and wherein the connection port housing includes guide hole corresponding to the guide pin.

According to one embodiment of the present application, the connection port housing includes a yielding opening for at least a portion of the first section of the locking member.

According to one embodiment of the present application, the locking member has an elastic arch projecting outward in the area of the second locking portion, wherein the elastic arch is supported on the inner wall of the connection port housing.

According to one embodiment of the present application, the optical fiber connection port assembly comprises spring arranged between the connection port housing and the locking member, wherein the spring maintains the locking member in the lock state.

According to one embodiment of the present application, the optical fiber connection port assembly comprises a fiber optic adapter at least partially located in the connection port housing.

According to one embodiment of the present application, viewed in an axial direction, the first locking portion, the second locking portion and the unlocking action portion are located between the fiber optic adapter and an inlet of the optical fiber connection port assembly.

According to one embodiment of the present application, the fiber optic adapter, the connection port housing and the locking member together define the receiving portion for receiving the optical fiber connector, wherein the fiber optic adapter includes a section for defining the circumferential relative orientation of the optical fiber connector with respect to the optical fiber connection port assembly, wherein the shape of the section is matched with the shape of a corresponding section of the optical fiber connector.

A second aspect of the present application relates to an optical fiber communication device, wherein the optical fiber communication device includes at least one optical fiber connection port assembly according to the first aspect of the present application.

According to one embodiment of the present application, the operating portion of the optical fiber connection port assembly is exposed from a housing of the optical fiber communication device, such that the operation to the operating portion from the outside of the optical fiber communication device is possible.

According to one embodiment of the present application,the optical fiber communication device is a splice closure including a splice closure housing and a plurality of optical fiber connection port assemblies arranged in the splice closure housing.

According to one embodiment of the present application, the splice closure housing includes a housing cover and a housing main body, wherein the housing main body includes a first partition wall dividing an inner space of the splice closure housing into a first space and a second space, wherein the connection port housing and the locking member of the optical fiber connection port assembly are arranged in the first space, wherein a fiber connection panel is arranged in the second space.

According to one embodiment of the present application, the first partition wall includes communication hole communicating the first space and the second space, wherein the fiber optic adapter of the optical fiber connection port assembly passes through the communication hole.

According to one embodiment of the present application, a sealing ring is provided between the fiber optic adapter and the communication hole.

According to one embodiment of the present application, the housing main body includes a housing bracket and a panel, wherein the panel defines connection entrance for the optical fiber connector.

According to one embodiment of the present application, the housing cover includes first retaining hook projecting into the first space, and wherein the panel includes second retaining hook for cooperating with the first retaining hook.

According to one embodiment of the present application, an axial position of the connection port housing in the optical fiber communication device is defined by the first retaining hook and the first partition wall.

According to one embodiment of the present application, the housing cover and the housing main body are fixed with respect to each other by way of high-frequency induction welding.

According to one embodiment of the present application, the splice closure comprises at least two rows of optical fiber connection port assemblies stacked on top of each other.

According to one embodiment of the present application, the splice closure housing includes second partition wall configured to partition two adjacent rows of optical fiber connection port assemblies from each other.

According to one embodiment of the present application, the splice closure includes a first housing cover and a second housing cover as the housing cover.

According to one embodiment of the present application, the optical fiber communication device comprises plug for the optical fiber connection port assembly, wherein the plug includes the first latching protrusion and the second latching protrusion.

A third aspect of the present application relates to an optical fiber communication system, wherein the optical fiber communication system includes an optical fiber communication device according to any one of claims 24 to 37 and an optical fiber cable assembly, wherein the optical fiber cable assembly includes an optical fiber cable and an optical fiber connector, wherein the optical fiber connector includes the first latching projection and the second latching projection.

According to one embodiment of the present application, the first latching projection and the second latching projection of the optical fiber connector are opposed to each other along the radial direction.

According to one embodiment of the present application, the optical fiber connector includes two elastic snap-fit structures movable from an initial state to a deformed state which is biased inward with respect to the initial state, and movable from the deformed state to the initial state under the action of the restoring elastic force, wherein one snap-fit structure comprises the first latching protrusion projecting outward, and the other snap-fit structure comprises the second latching protrusion projecting outward.

According to one embodiment of the present application,the two snap-fit structures are rotationally symmetrical to each other about the central axis of the optical fiber connector.

According to one embodiment of the present application, the snap-fit structure includes a first section extending along an axial direction and a second section extending from the first section along a circumferential direction, wherein the latching protrusion is formed in an area of the second section remote from the first section.

According to one embodiment of the present application, the first section and the second section are formed in a plate shape.

According to one embodiment of the present application, the latching protrusion includes a first guide slope raised in a first direction, wherein the first direction is directed from the head of the optical fiber connector to the tail of the optical fiber connector.

According to one embodiment of the present application, viewed along the first direction, the latching protrusion sequentially includes a top connecting to the first guide slope and a step portion forming a latching action surface.

According to one embodiment of the present application, the latching protrusion includes an unlocking slope descending along a circumferential direction.

According to one embodiment of the present application, the connector housing includes a connector body with an internal passage and a retainer ring with the snap-fit structure, wherein the retainer ring is sleeved on the connector body, wherein the internal passage is configured for optical fiber to extend through the optical fiber connector.

According to one embodiment of the present application, the retainer ring includes an annular base, wherein the snap-fit structure connecting to the base.

According to one embodiment of the present application, the connector body includes a positioning rib extending along the axial direction on the outer wall, and the retainer ring includes a positioning groove corresponding to the positioning rib on the inner wall, wherein the positioning rib and the positioning groove cooperate to define the positions of the retainer ring with respect to the connector body along the circumferential direction.

According to one embodiment of the present application, the connector body includes a recess extending along the circumferential direction on the outer wall, wherein in the case where the retainer ring is sleeved on the connector body, the second section of the snap-fit structure is located in the area of the recess, wherein the recess forms a free space for the second section of the snap-fit structure.

According to one embodiment of the present application, the snap-fit structure includes a retaining protrusion located on the inner wall of the second section, wherein in the case where the retainer ring is sleeved on the connector body, the retaining protrusion and the recess cooperate to define the positions of the retainer ring with respect to the connector body along the axial direction.

According to one embodiment of the present application, the retaining protrusion transitions, along a second direction, to the inner wall of the second section by way of a second guide slope, wherein the second direction is directed from the tail of the optical fiber connector to the head of the optical fiber connector.

According to one embodiment of the present application, the retaining protrusion is located at a position corresponding to the latching protrusion.

According to one embodiment of the present application, the optical fiber connector includes at least one annular groove located between the snap-fit structure and the head of the optical fiber connector, wherein sealing ring is provided in the annular groove.

According to one embodiment of the present application, the optical fiber connector includes a ferrule assembly including ferrule, spring and ferrule housing, wherein the ferrule abuts against the ferrule housing via the spring and protrudes from the front end of the ferrule housing.

According to one embodiment of the present application, the ferrule housing includes connection slot formed in the tail area thereof, and wherein the connector housing includes connection key formed in the head area thereof, wherein the ferrule housing is mounted on the connector housing in such a manner that the connection key is engaged in the connection slot.

According to one embodiment of the present application,the connection key and the connection slot extend along the axial direction.

According to one embodiment of the present application, the ferrule housing comprises chamfer extending from its front end to back end.

According to one embodiment of the present application, the ferrule housing, at least in the front area thereof, comprises a rectangular outer cross section, wherein the chamfer is formed on at least one edge of the ferrule housing.

According to one embodiment of the present application, the chamfer extends over a portion of the length of the ferrule housing.

According to one embodiment of the present application, in the case where the ferrule housing is mounted on the connector housing, the outer surface of the ferrule housing and the outer surface of the connector housing smoothly align with each other at least in some areas.

According to one embodiment of the present application, in the case where the ferrule housing is mounted on the connector housing, the outer surface of the ferrule housing and the outer surface of the connector housing smoothly align with each other, except for the area of the connection key and the connection slot.

According to one embodiment of the present application, the optical fiber connector includes an optical cable fastener and/or the optical fiber cable assembly includes a tail sleeve.

Other features and advantages of the subject art of the present application will be described in the following descriptions, and will be partially obvious from said descriptions, or may be learned by practicing the subject art of the present application. Advantages of the subject art of the present application will be realized and attained by the structure particularly set forth in the specification and the accompanying drawings.

It should be understood that, the aforementioned general descriptions and the following detailed descriptions are all exemplary and illustrative, and are intended to provide a further explanation of the subject art of the present application for which protection is sought.

### BRIEF DESCRIPTION OF THE DRAWINGS

A plurality of aspects of the present application will be better understood after reading the following embodiments in combination with the accompanying drawings, wherein:
Figs. 1 to 3 schematically show an optical fiber connection port assembly according to one embodiment of the present application;
Fig. 4 schematically shows an exploded view of an optical fiber connection port assembly according to one embodiment of the present application;
Fig. 5 schematically shows a sectional view of the optical fiber connection port assembly according to Fig. 4;
Fig. 6 schematically shows the optical fiber connection port assembly according to Fig. 5 together with an optical fiber cable assembly inserted into the optical fiber connection port assembly;
Fig. 7 schematically shows a sectional view of the optical fiber connection port assembly according to Fig. 5 together with the optical fiber cable assembly inserted into the optical fiber connection port assembly;
Fig. 8 schematically shows an enlarged portion of Fig. 7;
Figs. 9 to 11 schematically show a locking member of the optical fiber connection port assembly according to Fig. 1;
Figs. 12 to 14 schematically show a connection port housing of the optical fiber connection port assembly according to Fig. 1;
Fig. 15 schematically shows a locking member of an optical fiber connection port assembly according to another embodiment of the present application;
Fig. 16 schematically shows an optical fiber communication device according to one embodiment of the present application;
Fig. 17 schematically shows a housing bracket and an optical fiber connection port assembly of the optical fiber communication device according to Fig. 16;
Fig. 18 schematically shows a housing cover of the optical fiber communication device according to Fig. 16;
Fig. 19 schematically shows a panel of the optical fiber communication device according to Fig. 16;
Fig. 20 schematically shows a housing of the optical fiber communication device according to Fig. 16;
Fig. 21 schematically shows an optical fiber communication device according to Fig. 16 and the plugs thereof;
Fig. 22 schematically shows an optical fiber cable assembly of an optical fiber communication system according to one embodiment of the present application;
Fig. 23 schematically shows an exploded view of the optical fiber cable assembly of Fig. 22;
Fig. 24 schematically shows a perspective view of the optical fiber cable assembly of Fig. 22;
Fig. 25 schematically shows different cable fasteners for the optical fiber cable assembly of Fig. 22;
Fig. 26 schematically shows an exploded view of the connector housing of the optical fiber connector of the optical fiber cable assembly of Fig. 22;
Fig. 27 schematically shows a sectional view of the connector housing of Fig. 26;
Fig. 28 schematically shows a perspective view of the connector housing of Fig. 26;
Figs. 29 to 31 schematically show a retainer ring of the connector housing of Fig. 26 from different perspectives;
Fig. 32 schematically shows a ferrule housing of the optical fiber cable assembly of Fig. 22;
Fig. 33 schematically shows the fiber optic adapter of the optical fiber connection port assembly of Fig. 4.

### DETAILED DESCRIPTIONOF PREFERRED EMBODIMENTS

The present application will be described as follows with reference to the accompanying drawings, in which certain embodiments of the present application are shown. However, it is to be understood that the present application may be embodied in many different forms and should not be construed as limited to the embodiments that are pictured and described herein. Rather, these embodiments are provided so that this disclosure will be thorough and complete, and will fully convey the scope of the application to those skilled in the art. It will also be appreciated that the embodiments disclosed herein can be combined in any way to provide many additional embodiments.

Like numbers refer to like elements throughout. In the figures, the dimensions of certain features may be alternated for clarity.

It should be understood that the words in the Specification are only used to describe specific embodiments and are not intended to limit the present application. Unless otherwise defined, all terms (including technical terms and scientific terms) used in the Specification have the meanings commonly understood by those of ordinary skill in the art. For brevity and/or clarity, well-known functions or structures may not be further described in detail.

The singular forms "a", "an", "the" and "this" used in the Specification all include plural forms unless clearly indicated. The words "comprise", "contain" and "have" used in the Specification indicate the presence of the claimed features, but do not exclude the presence of one or more other features. The word "and/or" used in the Specification includes any or all combinations of one or a plurality of the related listed items. The words "between X and Y" and "between approximate X and Y" used in the Specification shall be interpreted as including X and Y. As used herein, the wording "between approximate X and Y" means "between approximate X and approximate Y", and as used herein, the wording "from approximate X to Y" means "from approximate X to approximate Y".

In the Specification, when it is described that an element is "on" another element, "attached" to another element, "connected" to another element, "coupled" to another element, or "in contact with" another element, etc., the element may be directly on another element, attached to another element, connected to another element, coupled to another element, or in contact with another element, or an intermediate element may be present. In contrast, if an element is described "directly" "on" another element, "directly attached" to another element, "directly connected" to another element, "directly coupled" to another element or "directly in contact with" another element, there will be no intermediate elements. In the Specification, a feature that is arranged "adjacent" to another feature, may denote that a feature has a part that overlaps an adjacent feature or a part located above or below the adjacent feature.

In the Specification, words expressing spatial relations such as "upper", "lower", "left", "right", "front", "rear", "top", and "bottom" may describe the relation between one feature and another feature in the attached drawings. It should be understood that, in addition to the locations shown in the attached drawings, the words expressing spatial relations further include different locations of a device in use or operation. For example, when a device in the attached drawings rotates reversely, the features originally described as being "below" other features now can be described as being "above" the other features". The device may also be oriented by other means (rotated by 90 degrees or at other locations), and at this time, a relative spatial relation will be explained accordingly.

Next, exemplary embodiments of the present application will be described in detail in conjunction with the accompanying drawings.

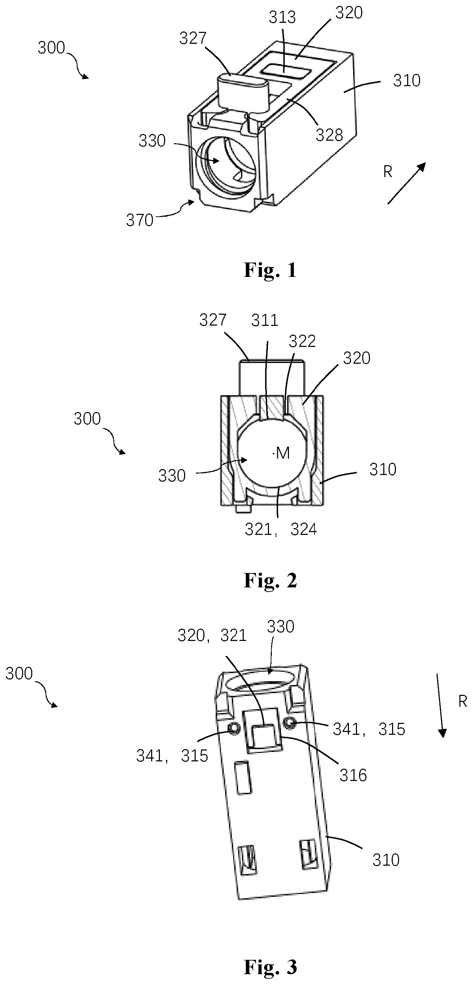

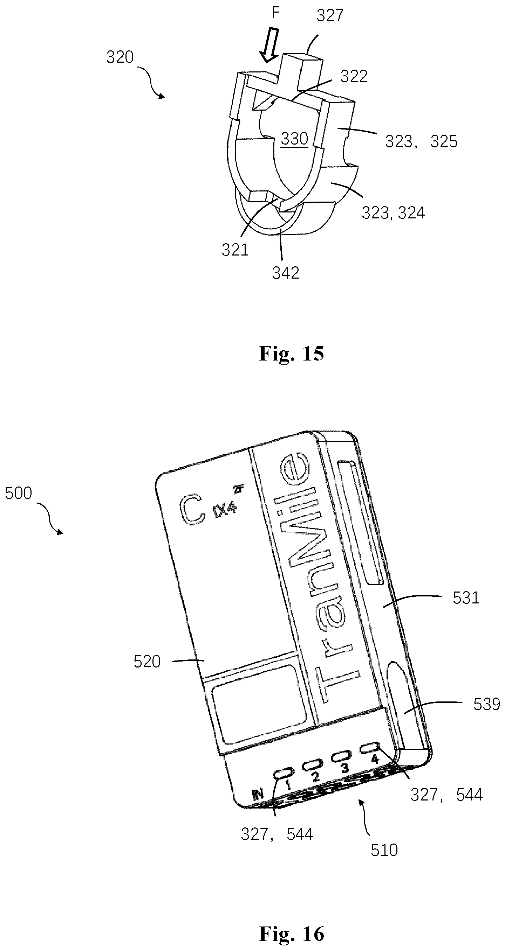

Figs. 1 to 3 schematically show an optical fiber connection port assembly 300 according to one embodiment of the present application. The optical fiber connection port assembly 300 may, for example, form an optical fiber connection port of an optical fiber communication device, such as a fiber optic splice closure 500 (see Fig. 16), an optical router, an optical fiber switch, an optical fiber transceiver or an optical fiber modem, etc. The optical fiber cable assembly comprising an optical fiber connector may be accessed into the optical fiber communication device via an optical fiber connection port, particularly the optical fiber connection port assembly 300. The optical fiber connection port assembly 300 may include a connection port housing 310 and a locking member 320. The connection port housing 310 and the locking member 320 may together define at least a portion of a receiving portion 330 for receiving an optical fiber connector. The receiving portion 330 may have an inlet 370 that is open to the outside, and the optical fiber connector may be inserted into the receiving portion 330 of the optical fiber connection port assembly 300 along an insertion direction R via the inlet 370. The locking member 320 may be disposed in the connection port housing 310 and may transition between a lock state and an unlock state with respect to the connection port housing 310. In the lock state, the optical fiber connection port assembly 300 may prevent the optical fiber connector located in the receiving portion 330 from moving against the insertion direction R, thereby holding the optical fiber connector in the optical fiber connection port assembly 300. However, in the unlock state, the optical fiber connection port assembly 300 may allow the optical fiber connector located in the receiving portion 330 to move against the insertion direction R, so that the optical fiber connector may be pulled out from the optical fiber connection port assembly 300.

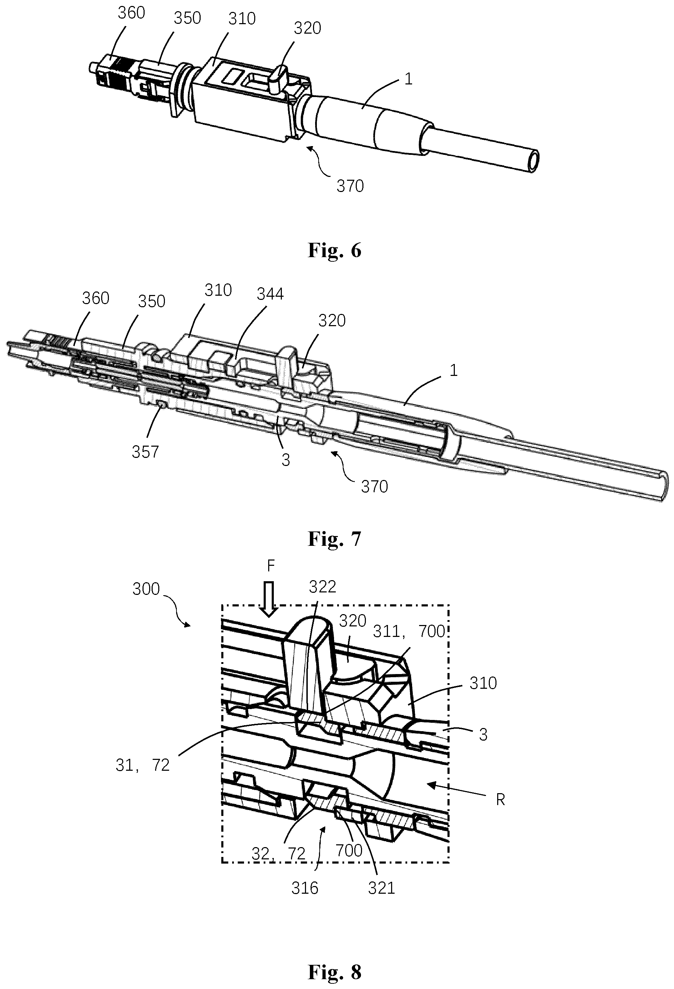

As can be most clearly seen from Fig. 2, Fig. 5 and Fig.8 (which exemplarily shows the optical fiber connector 3 inserted and held in the optical fiber connection port assembly 300), the connection port housing 310 may include a first locking portion 311 for the first latching protrusion 31 of the optical fiber connector 3. In addition, the locking member 320 may include a second locking portion 321 for the second latching protrusion 32 of the optical fiber connector 3. In the circumstance shown in Fig. 8, the locking member 320 is in a lock state with respect to the connection port housing 310, wherein the optical fiber connector 3 can be held in the optical fiber connection port assembly 300 by the interaction of the first latching protrusion 31 and the first locking portion 311 and by the interaction of the second latching protrusion 32 and the second locking portion 321. Specifically, the parts of the first locking portion 311 and the second locking portion 321 which produce a main locking effect may be their respective locking surfaces 700 facing towards the rear portion of the connection port assembly 300. The locking surfaces 700 may form a stopper of the first latching protrusion 31 or the second latching protrusion 32 respectively, so as to prevent the optical fiber connector 3 from moving against the insertion direction R. The term "rear portion" may in particular be understood, when viewed along the insertion direction R, as a portion opposite to the inlet 370, said portion is remote from the inlet 370.

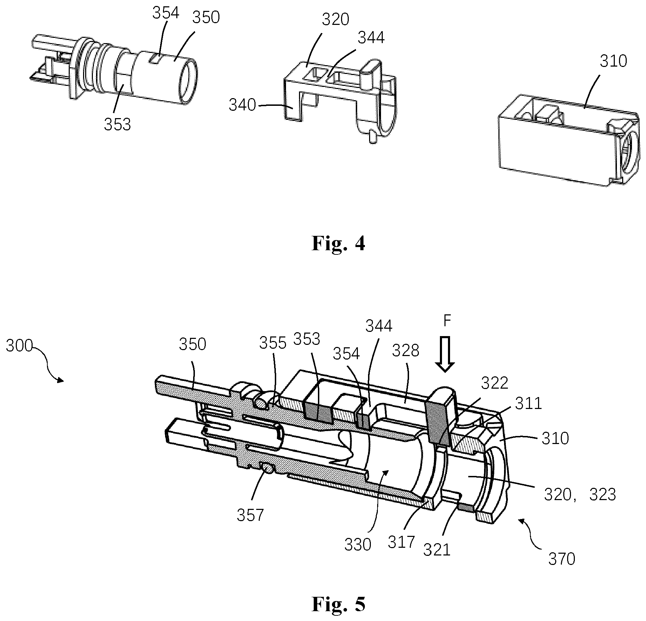

In addition, as shown in Figs. 2, 5 and 8, the locking member 320 further includes an unlocking action portion 322 for the first latching protrusion 31 of the optical fiber connector 3. The unlock state of the locking member 320 may be a state in which, compared with the lock state, the second locking portion 321 of the locking member 320 is more remote from the receiving portion 330 or, in other words, more remote from the optical fiber connector 3 located in the receiving portion 330, and the unlocking action portion 322 of the locking member 320 is more proximate to the receiving portion 330 or, in other words, more proximate to the optical fiber connector 3 located in the receiving portion 330. To be specific, in the shown embodiment, the transition of the locking member 320 from the lock state to the unlock state may be understood as that the locking member 320, starting from the state shown in Figs. 5 and 8, at least partially moves or deforms downwards (see arrow F) with respect to the connection port housing 310, so that the unlocking action portion 322 of the locking member 320 may act (here downwardly) on the first latching protrusion 31 of the optical fiber connector 3 located in the receiving portion 330. Because the first locking portion 311 is constructed on the connection port housing 310, the first locking portion 311 may remain substantially unchanged in position during this process, so that the first latching protrusion 31, which is subjected to downward force and for example deforms downwardly, may disengaged from the first locking portion 311. At the same time, the second locking portion 321 of the locking member 320 may also move downwards and leave the second latching protrusion 32 of the optical fiber connector 3 located in the receiving portion 330, so that the second latching protrusion 32 may disengage from the second locking portion 321. Thus, in the unlock state, the optical fiber connector 3 is allowed to be pulled out from the optical fiber connection port assembly 300.

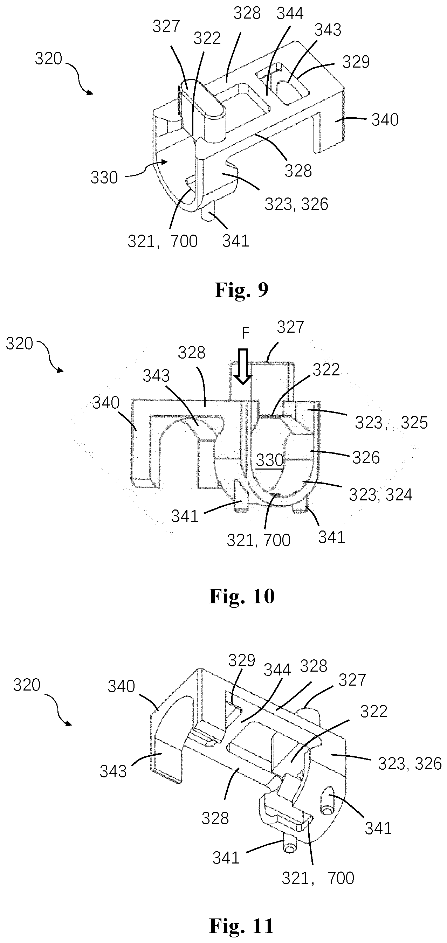

As shown in Figs. 9 to 11, the locking member 320 may include an environ portion 323 that at least partially defines the receiving portion 330. Here, the environ portion 323 may in particular be understood as a section of the locking member 320 surrounding the central axis M (see Fig. 2), which may be enclosed in a circumferential direction or form a closed loop. The central axis M may extend substantially along the insertion direction R. In other words, the central axis may be understood as the extending axis of the optical fiber of the optical fiber cable assembly in the optical fiber connection port assembly 300 when the optical fiber cable assembly with the optical fiber connector 3 is inserted and held in the optical fiber connection port assembly 300.

The second locking portion 321 may for example be formed in the first segment 324 of the environ portion 323. Here, the first segment 324 is, for example, in the shape of a semi-cylindrical shell. In other embodiments, the first segment 324 may also have other suitable shapes, such as a semi-square shape. The second locking portion 321 may be configured as a notch in the first segment 324, said notch may open toward the rear portion of the locking member 320. The surface of the notch facing towards the rear portion of the locking member 320 may be the locking surface 700 of the second locking portion 321. In other embodiments, the second locking portion 321 may also be configured as a "hole" in the first segment 324, rendering the first segment 324 non-simply connected.

The unlocking action portion 322 may be constructed in the second segment 325 of the environ portion 323. The first segment 324 and the second segment 325 may together form the environ portion 323. Here, the first segment 324 may present as a lower half segment and the second segment 325 may present as an upper half segment.

Advantageously, as shown in Figs. 5 and 8 to 11, the second locking portion 321 and the unlocking action portion 322 of the locking member 320 may be advantageously opposed to each other along the unlocking movement direction F of the locking member 320. Therefore, when the locking member 320 for example at least partially moves or deforms in the unlocking movement direction F, the movement of the second locking portion 321 away from the receiving portion 330 and the movement of the unlocking action portion 322 closer to the receiving portion 330 (or, in other words, the movement of the unlocking action portion into the receiving portion 330) may occur substantially simultaneously, so as to facilitate the release.

In some embodiments, it is also conceivable that only the unlocking action portion 322 is located in the unlocking movement direction F of the locking member 320, while the second locking portion 321 may be located outside the unlocking movement direction F of the locking member 320. To be specific, the second locking portion 321 may be angularly offset from the unlocking actuator 322 by an angular distance of, for example, 90° to 180°, such as 90° to 120°. Therefore, the second locking portion 321 may be, for example, configured on one or two side walls 326 of the environ portion 323 of the locking member 320. When the locking member 320 has transitioned to the unlock state, the second locking portion 321 formed on the side wall 326 may move away from the receiving portion 330 and slide laterally relative to the corresponding second latching protrusion of the optical fiber connector and disengage therefrom.

In order to realize the transition of the locking member 320 from the lock state to the unlock state, as shown in Figs. 9 to 11, the locking member 320 may include an operating portion 327 projecting outward (away from the receiving portion 330) in the area of the unlocking action portion 322. Here, the operating portion 327 may be configured in the form of a button, and the locking member 320 is transitionable from the lock state to the unlock state by pressing the operating portion 327 along the unlocking movement direction F in Fig. 10. The operating portion 327, the unlocking action portion 322 and the second locking portion 321 of the locking member 320 may be substantially located on a straight line. The straight line may be parallel to the unlocking movement direction F and may intersect the central axis M. This is beneficial to force transmission and motion transmission. In particular, when viewed along the unlocking movement direction F, the operating portion 327, the unlocking action portion 322 and the second locking portion 321 of the locking member 320 may be arranged sequentially.

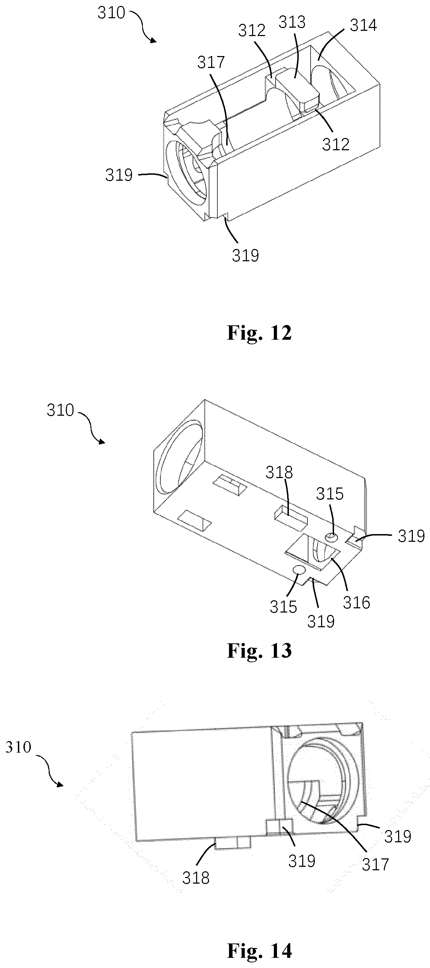

In some embodiments, the locking member 320 may be at least partially elastic, and may be elastically deformed from the lock state to the unlock state(for example, in the case where the operating portion 327 is pressed), and may transition from the unlock state to the lock state under the restoring elasticity. Here, the lock state may be a state that the locking member 320 inherently presents in the case where it is arranged in the connection port housing 310. Specifically, as shown in Figs. 1, 5 and 9 to 11, the locking member 320 may include an elastic arm 328, here two elastic arms 328, extending in the axial direction. The elastic arm 328 may be connected to the environ portion 323, in particular in the upper area of the environ portion 323 to the second segment 325 of the environ portion 323. As shown in Fig. 12, the connection port housing 310 may include a support portion 312 for the elastic arm 328. In the case where the locking member 320 is disposed in the connection port housing 310, the elastic arms 328 of the locking member 320 may be supported on the supporting portion 312 respectively. When the operating portion 327 is pressed, the elastic arm 328 may be bent and deformed downwardly with the support portion 312 acting as a fulcrum, so that the locking member 320 transitions from the lock state to the unlock state.

As shown in Figs. 9 to 12, the connection port housing 310 may further include a positioning protrusion 313, which may cooperate with the positioning cutout 329 of the locking member 320. The locking member 320 may further have a tail section 340 at an end opposite to the environ portion 323. In the case where the locking member 320 is disposed in the connection port housing 310, the tail section 340 may be closely adjacent to the inner end wall 314 of the connection port housing 310. During the downward bending of the elastic arm 328 of the locking member 320, through the interaction between the positioning protrusion 313 and the positioning cutout 329 and/or through the interaction between the tail section 340 and the inner end wall 314, it can be ensured that the locking member 320 always remains in the connection port housing 310 without sliding.

As shown in Figs. 9 to 11, the locking member 320 may comprise a guide pin 341. The guide pin 341 may be formed in the area of the first segment 324 of the locking member 320, for example, formed on the outer wall of the first segment 324 and project away from the receiving portion 330. Correspondingly, as shown in Fig. 13, the connection port housing 310 may comprise guide hole 315 matched with the guide pin 341. The movement direction of the locking member 320 with respect to the connection port housing 310, particularly the unlocking movement direction F of the environ portion 323, may be guided by the guide pin 341 and the guide hole 315. Although there are two pairs of guide pins 341 and guide holes 315 in the embodiment shown in the figures, other numbers of guide pins 341 and guide holes 315, for example, only one guide pin 341 and only one guide hole 315, are also readily applicable.

As shown in Figs. 3 and 13, the connection port housing 310 may include a yielding opening 316 for at least a portion of the first segment 324 of the locking member 320, particularly for the area of the second locking portion 321. During the transition of the locking member 320 to the unlock state, the yielding opening 316 may allow a corresponding portion of the locking member 320 to continue to move downward without interfering with the connection port housing 310.

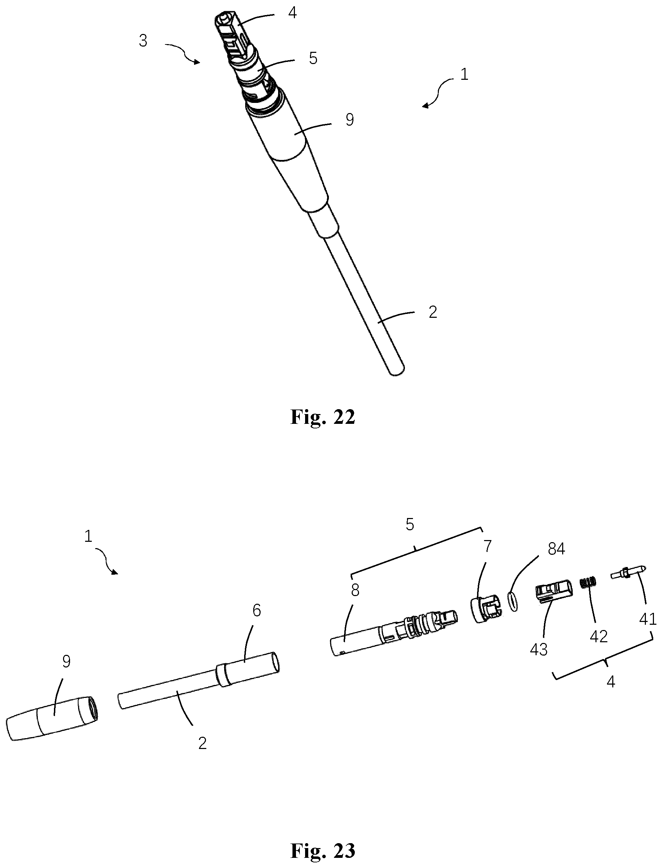

As can be most clearly seen from Fig. 2, the distance between the second locking portion 321 and the central axis M of the receiving portion 330 may correspond to the distance between the first locking portion 311 and the central axis M of the receiving portion 330. The central axis M of the receiving portion 330 may also be understood here as the longitudinal extension axis of the optical fiber of the optical fiber cable assembly in the receiving portion 330, when the optical fiber cable assembly having the optical fiber connector 3 is inserted and held in the receiving portion 330. Thus, the inner wall of the first locking portion 311 and the inner wall of the first segment 324, in particular the second locking portion 321, are at substantially the same distance from the central axis M of the receiving portion 330, which is beneficial for supporting and holding the optical fiber connector on both sides in a balanced manner. This arrangement structure is particularly advantageous for optical fiber connector 3 having the first latching projection 31 and the second latching projection 32 which are symmetrical to each other. This exemplary embodiment of the optical fiber connector 3 will be described in more detail below in conjunction with Figs. 22 to 31.

In addition, as can be most clearly seen from Fig. 2, in the case where the locking member 320 is disposed in the connection port housing 310 and the operating portion 327 is not operated, or in other words, in the lock state of the locking member 320, the inside diameter of the first segment 324 of the locking member 320 may be advantageously smaller than the distance between the unlocking action portion 322 and the central axis M of the receiving portion 330. In other words, the distance between the unlocking action portion 322 and the central axis M of the receiving portion 330 may be greater than the distance between the inner wall of the first locking portion 311 and the central axis M of the receiving portion 330. Therefore, the unlocking action portion 322 of the locking member 320 may be readily located outside the receiving portion 330 in the lock state without affecting the insertion and holding of the optical fiber connector.

Alternatively, Fig. 15 schematically shows a locking member 320 of an optical fiber connection port assembly according to another embodiment of the present application. Here, the locking member 320 may have an elastic arch portion 342 projecting outward (facing away) in the area of the second locking portion 321. In the case where the locking member 320 is mounted in the connection port housing 310, the elastic arch part 342 may be supported on the inner wall, particularly the bottom of the connection port housing 310. The locking member 320 is transitionable from the lock state to the unlock state by operating, for example, pressing the operating portion 327 so that the elastic arch part 342 is elastically deformed along the unlocking movement direction F.

Alternatively, in other embodiments not shown, the optical fiber connection port assembly 300 may include a spring arranged between the connection port housing 310 and the locking member 320. Here, the locking member 320 may be configured analogous to that in Fig. 15, but may not have the elastic arch portion 342. The locking member 320 may be biased or preloaded toward the lock state by the spring. When the operating portion 327 is operated, for example pressed, the entire locking member 320 may transition from the lock state to the unlock state against the elastic force of the spring. In this embodiment, the locking member 320 may be formed to be rigid or non-elastic.

In some embodiments, as shown in Figs. 4 and 5, the optical fiber connection port assembly 300 may further include a fiber optic adapter 350 which is at least partially located in the connection port housing 310. The fiber optic adapter 350 may be placed and held in the connection port housing 310, for example, from the rear end of the connection port housing 310, and, when viewed along the axial direction, the first locking portion 311, the second locking portion 321 and the unlocking portion 322 may be located between the fiber optic adapter 350 and the inlet 370 of the optical fiber connection port assembly for the optical fiber connector. As shown in Figs. 6 and 7, a forward end of the fiber optic adapter 350 or the end located in the connection port housing 310 may be adapted to the optical fiber connector 3 to be connected to the optical fiber connection port assembly 300 from the inlet 370, while a backward end of the fiber optic adapter 350 may be adapted to another optical fiber connector, such as the SC connector 360 (see Figs. 6 and 7). By way of the fiber optic adapter 350, optical connection may be established between these two optical fiber connectors, in particular between two optical fiber cables each having one of these two optical fiber connectors.

During the assembling, the fiber optic adapter 350 may be first inserted into the connection port housing 310 from the rear side of the connection port housing 310. As can be most clearly seen from Fig. 5, the connection port housing 310 may be formed with an inner flange 317 on the inner wall. The front end of the fiber optic adapter 350 may abut against the inner flange 317 to define the axial position of the fiber optic adapter 350 in the connection port housing 310. Alternatively or additionally, the fiber optic adapter 350 itself may also be formed with an outer flange 355 on the outer wall, and the outer flange 355 may abut against the rear end face of the connection port housing 310 to define the axial position of the fiber optic adapter 350 in the connection port housing 310. As shown in Figs. 4 and 5, a concave first positioning structure 353 may be formed on the outer wall of the fiber optic adapter 350. Correspondingly, the outer contour of the first positioning structure 353 may substantially correspond to the corresponding inner contour 343 of the tail section 340 of the locking member 320 (see Figs. 9 to 11). In addition, on the outer wall of the fiber optic adapter 350, a concave second positioning structure 354 may be formed at an axial distance from the first positioning structure 353 (for example, in front of the first positioning structure 353). After the fiber optic adapter 350 is inserted into the connection port housing 310, the locking members 320 may be installed top-down onto the connection port housing 310 and the fiber optic adapter 350. At this time, the guide pin 341 of the locking member 320 may be placed into the corresponding guide hole 315 of the connection port housing 310; and/or the inner contour 343 of the locking member 320 may be matched with the outer contour of the first positioning structure 353 of the fiber optic adapter 350; and/or the second positioning structure 354 of the fiber optic adapter 350 may be matched with the crossbar 344 of the locking member 320. Thus, the fiber optic adapter 350, the locking member 320 and the connection port housing 310 may be assembled together by cooperating with each other. As can be most clearly seen from Fig. 5, the concave first positioning structure 353 and the concave second positioning structure 354 may prevent the fiber optic adapter 350 from being pulled out from the connection port housing 310.

The fiber optic adapter 350, the connection port housing 310 and the locking member 320 may together define the receiving portion 330 for receiving the optical fiber connector 3. In order to ensure that the optical fiber connector 3 is inserted into the optical fiber connection port assembly 300 in a desired orientation, the optical fiber connection port assembly 300, for example, the fiber optic adapter 350, may comprise a section for defining a circumferential orientation of the optical fiber connector 3 with respect to the optical fiber connection port assembly 300, and the shape of said section matches the shape of the corresponding section of the optical fiber connector. It can be understood that, such shape should be configured to be unique in the circumferential direction (i.e., in the rotation direction around the central axis M). In other words, this shape is neither radially symmetric about the central axis M nor rotationally symmetric about the central axis M. In this way, the orientation of the optical fiber connector 3 with respect to the optical fiber connection port assembly 300 in the circumferential direction may be uniquely defined by the form fitting of said section of the optical fiber connection port assembly 300 and the corresponding section of the optical fiber connector.

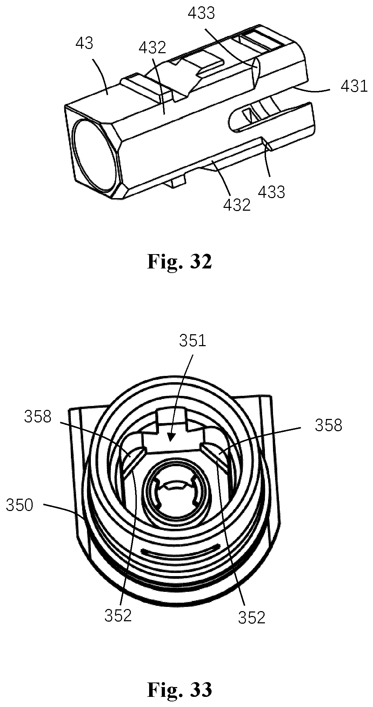

Specifically, in some embodiments, as shown in Figs. 32 and 33, the optical fiber connector 3, here the ferrule housing 43 of the optical fiber connector 3, may comprise a chamfer 432 extending from its front to rear. The ferrule housing 43 may have a substantially rectangular outer cross-section at least in its front area, preferably over its entire length. The chamfer 432 may be formed on at least one edge, for example, two or three edges of the ferrule housing 43. Here, the chamfer 432 may extend over part of the length of the ferrule housing 43. It is also feasible that, the chamfer 432 extends over the entire axial length of the ferrule housing 43. Accordingly, as shown in Fig. 33, the receiving segment 351 of the fiber optic adapter 350 for receiving the ferrule housing 43 may have an inner section 352 matched with the chamfer 432, the circumferential orientation of the optical fiber connector 3 with respect to the fiber optic adapter 350 and thus with respect to the optical fiber connection port assembly 300 may be uniquely defined by the inner section 352 and the chamfer 432.

It can be understood that, the optical fiber connection port assembly 300 according to the present application may be configured to receive any optical fiber connector having suitable first latching protrusion and second latching protrusion and/or any optical fiber cable assembly having such optical fiber connector. Readily, the optical fiber connector compatible with the optical fiber connection port assembly 300 is not limited to the embodiment shown by way of example in the figures, but may have diversified configurations.

Fig. 16 schematically shows an optical fiber communication device according to one embodiment of the present application. The optical fiber communication device is exemplarily embodied as a fiber optic splice closure 500 here. Without limitation thereto, the optical fiber communication device may be any device comprising optical fiber connection port, such as optical router, optical fiber switch, optical fiber transceiver and optical fiber modem.

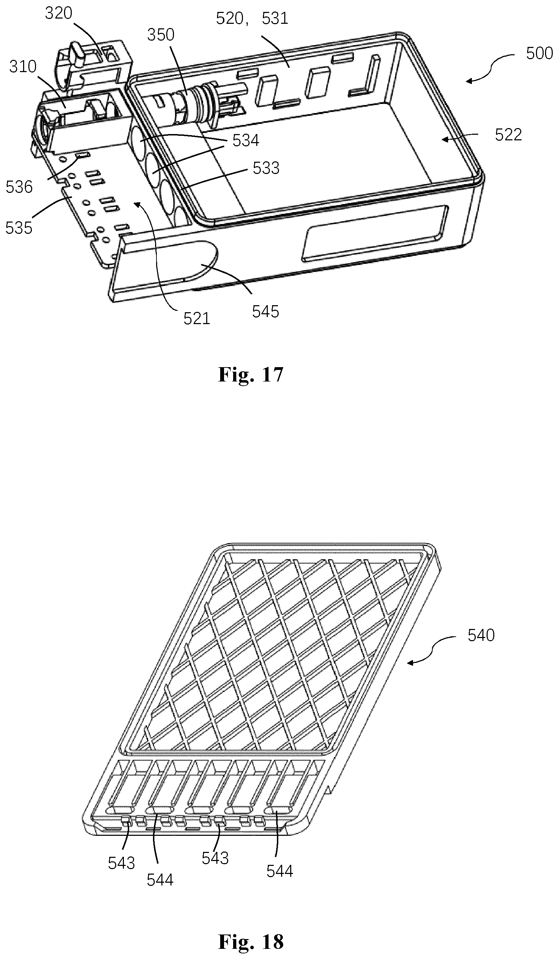

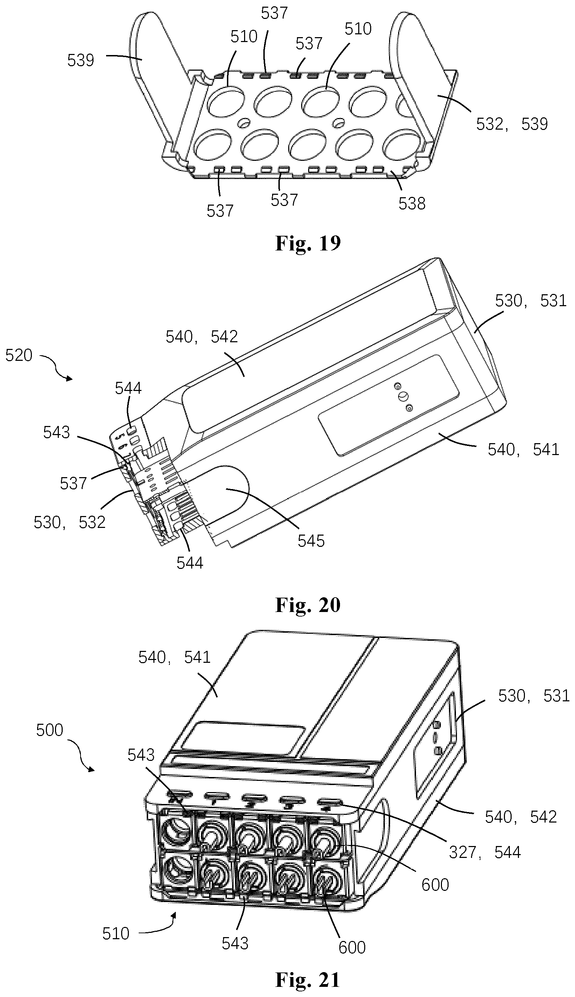

As can be most clearly seen from Figs. 16 and 21, the fiber optic splice closure 500 may include 10 connection entrances 510 for the accessing of the optical fiber cable assembly. In Fig. 21, plugs 600 are mounted in 8 connection entrances 510. The plug 600 may be constructed to avoid dust and water from entering the fiber optic splice closure 500. When necessary, the corresponding plug 600 may be pulled out from the connection entrance 510 to allow access for the respective optical fiber cable assembly. As shown in Figs. 17 and 21, the fiber optic splice closure 500 may include at least one (here, 10) optical fiber connection port assembly/assemblies 300 accommodated in the splice closure housing 520. However, in Fig. 17, for the sake of clarity, only one of the fiber connection port assemblies 300 is shown. The interconnection between the fiber optic splice closure 500 and the optical fiber cable assembly may be realized by way of the optical fiber connection port assembly 300. The inlet 370 of the optical fiber connection port assembly 300 may be aligned with the connection entrance 510 of the optical fiber communication device.

In the shown embodiments, the splice closure housing 520 may include a housing bracket 531 (see Fig. 17) and a panel 532 (see Fig. 19) forming a housing main body 530 and include housing cover 540 (see Fig. 18). The connection entrance 510 of the fiber splice closure 500 may be defined by the panel 532. The housing main body 530 and the housing cover 540 may together define an inner space of the splice closure housing 520. In the shown embodiments, the optical fiber connection port assemblies 300 may be arranged in two rows stacked one above the other in the fiber optic splice closure 500. In order to facilitate mounting the optical fiber connection port assembly 300 in the fiber optic splice closure 500, as shown in Figs. 20 and 21, the fiber optic splice closure 500 may include a first housing cover 541 and a second housing cover 542, which may be mounted on respective sides of the housing bracket 531. Thus, one row of optical fiber connection port assemblies 300 may be conveniently arranged in the housing bracket 531 from both sides, respectively, and the corresponding first housing cover 541 or second housing cover 542 may be subsequently covered and fixed on the housing bracket 531, for example by way of high frequency induction welding. Alternatively or additionally, the first housing cover 541 and the second housing cover 542 may also be glued or ultrasonically welded to the housing bracket 531, for example.

As shown in Fig. 17, the inner space of the splice closure housing 520 may be partitioned into a first space 521 and a second space 522 by the housing main body 530, in particular by the first partition wall 533 of the housing bracket 531. The optical fiber connection port assembly 300, in particular its connection port housing 310 and locking member 320, may be arranged in the first space 521. Moreover, functional components of the fiber optic splice closure 500, such as fiber connection panel and jumpers (not shown), may be disposed in the second space 522.

The housing bracket 531 may include a second partition wall 535 for partitioning the two adjacent rows of optical fiber connection port assemblies 300 from each other. The second partition wall 535 may exist only in the area of the first space 521. In order to define the position of the optical fiber connection port assembly 300 in the splice closure housing 520, in particular the position of the connection port housing 310 in the first space 521, the splice closure housing 520 (here, the second partition wall 535 thereof) may be formed with positioning cutouts 536. Correspondingly thereto, as shown in Figs. 13 and 14, the bottom side of the connection port housing 310 may be constructed with a positioning protrusion 318 matched with the positioning cutout 536.

Alternatively or additionally, in some embodiments, as shown in Figs. 12 to 14, the lower area of the connection port housing 310 may have notch(es) 319. When viewing towards the front side of the connection port housing 310, the notch 319 may, for example, be formed at the left lower corner and the right lower corner of the connection port housing 310, respectively. In the second partition wall 535 of the splice closure housing 520, for example, boss(es) corresponding to the notch(es) 319 may be formed, and the position of the connection port housing 310 in the splice closure housing 520 may be defined by the cooperation of the boss with the notch 319.

Continuing to refer to Fig. 17, the first partition wall 533 may include communication hole(s) 534 that communicate(s) the first space 521 with the second space 522. During assembling, the fiber optic adapter 350 of the optical fiber connection port assembly 300 may, for example, pass through a corresponding communication hole 534 from the second space 522 and may be inserted into the connection port housing 310 located in the first space 521. A sealing ring 357 may be provided between the fiber optic adapter 350 and the communication hole 534 (see Figs. 5 and 7). The sealing between the first space 521, the fiber optic adapter 350 and the second space 522 may be realized by the sealing ring 357.

As shown in Figs. 18 and 21, the housing cover 540 may include a first retaining hook 543 (particularly, projecting into the first space 521 in the assembled state). As shown in Fig. 19, the panel 532 may include a second retaining hook 537. The panel 532 may be hooked on the housing cover 540 by the cooperation of the first retaining hook 543 and the second retaining hook 537 with each other (see Fig. 20).

In some embodiments, as shown in Fig. 19, the connection entrance 510 and the second retaining hook 537 may be located in a planar portion 538 of the panel 532 that forms the front side surface of the optical fiber splice closure 500. From the left and right sides of the planar portion 538, legs 539 extending substantially perpendicular to the planar portion 538 may be formed, respectively, these two legs 539 may extend in parallel to each other backward towards the direction of the housing bracket 531 (see Fig. 16). As shown in Fig. 17, the housing bracket 531 may have push-in grooves 545 corresponding to the legs 539 on its left and right side walls. During assembling, the legs 539 of the panel 532 may slide in the push-in grooves 545 and guide the installation of the panel 532.

Fig. 21 shows a partially assembled fiber splice closure 500, in which the panel 532 has not been mounted. As may be seen from Fig. 21, in some embodiments, the first retaining hook 543 of the housing cover 540 projecting into the first space 521 may serve as a front stopper of the optical fiber connection port assembly 300, particularly the connection port housing 310, to prevent the connection port housing 310 from sliding forward out of the splice closure housing 520. Here, the axial position of the connection port housing 310 in the splice closure housing 520 may be alternatively or additionally defined by the first retaining hook 543 and the first partition wall 533 (see Fig. 17). Here, the "axial direction" may be substantially understood as the insertion direction R when inserting optical fiber cable assembly into the optical fiber connection port assembly 300 and thus accessing into the fiber optic splice closure 500.

As shown in Figs. 16, 18, 20 and 21, the housing cover 540 may include a through hole 544 for the operating portion 327 of the optical fiber connection port assembly 300. Thus, the operating portion 327 may be exposed from the housing of the fiber optic splice closure 500, so that the operating portion 317 may be operated from the outside of the fiber optic splice closure 500. By operating the operating portion 327, the connected optical fiber cable assembly may be allowed to be disconnected from the fiber optic splice closure 500.

In some embodiments, at least one optical fiber connection port assembly 300 of the optical fiber connection port assemblies 300 may form an input terminal of the fiber optic splice closure 500, so that signal may be input via the optical fiber cable connected to the input terminal. Moreover, some other optical fiber connection port assemblies 300 of the optical fiber connection port assemblies 300 may form output terminals of the fiber optic splice closure 500, so that signal may be output to the optical fiber cable connected to the output terminal. In Fig. 21, one or both of the two connection entrances 510 on the left which are not provided with plugs 600 may be the input terminal of the fiber optic splice closure 500. In the case where there is only one input terminal, the other connection entrance 510 may be permanently closed, so as to avoid water and/or dust from entering. In Fig. 21, eight connection entrances 510 provided with plugs 600 on the right may be the output terminals of the fiber optic splice closure 500.

Without limitation to the shown embodiments, the optical fiber communication device, for example, the fiber optic splice closure 500, may also include any number of optical fiber connection port assemblies 300 as required, the optical fiber connection port assemblies 300 may be arranged in the optical fiber communication device in any suitable manner.

For example, in some embodiments not shown, the fiber optic splice closure 500 may include only one row or only one layer of optical fiber connection port assemblies 300. In this case, the fiber optic splice closure 500 may have only one housing cover 540, and the contents and features related to the second partition wall 535 described above may be transferred to the bottom plate of the fiber optic splice closure 500 accordingly, and the optical fiber connection port assembly 300, particularly its connection port housing 310, may be arranged on the bottom plate of the fiber optic splice closure 500.

The present application also relates to an optical fiber communication system, which may include an optical fiber communication device according to the present application and include an optical fiber cable assembly. The optical fiber cable assembly may be matched with the optical fiber communication device and, in particular, may be connected to the optical fiber communication device via the optical fiber connection port assembly. The optical fiber cable assembly may include an optical fiber cable and an optical fiber connector, wherein the optical fiber connector may include the first latching protrusion and the second latching protrusion.

Exemplary embodiments of the optical fiber cable assembly 1 and its optical fiber connector 3 suitable for connecting with the optical fiber connection port assembly 300 and/or the optical fiber communication device according to the present application, for example, the fiber optic splice closure 500, will be elaborated in more detail below in conjunction with Figs. 22 to 31.

Fig. 22 schematically shows a perspective view of an optical fiber cable assembly 1 that may cooperate with the optical fiber connection port assembly 300 and/or the optical fiber communication device, for example, the fiber optic splice closure 500. As shown in Figs. 22 to 24, the optical fiber cable assembly 1 may include an optical fiber cable 2 and an optical fiber connector 3 mounted on the optical fiber cable 2. The optical fiber connector 3 may also be used to couple the optical fiber cable 2 with other optical fiber cable or optical fiber segment, so as to establish optical connection between the optical fiber cable 2 and the other optical fiber cable or optical fiber segment. In addition, the optical fiber connector 3 may also be used to connect the optical fiber cable 2 to other devices, such as fiber optic splice closure 500, laser, receiver or optical splitter, etc.

The optical fiber connector 3 may include the first latching protrusion 31 and the second latching protrusion 32, for example as shown in Fig. 8. The first latching protrusion 31 and the second latching protrusion 32 of the optical fiber connector 3 may be opposed to each other in radial direction. Advantageously, the first latching protrusion 31 and the second latching protrusion 32 of the optical fiber connector 3 may be rotationally symmetrical to each other about the central axis of the optical fiber connector 3, which will be described in more detail later in conjunction with the accompanying drawings.

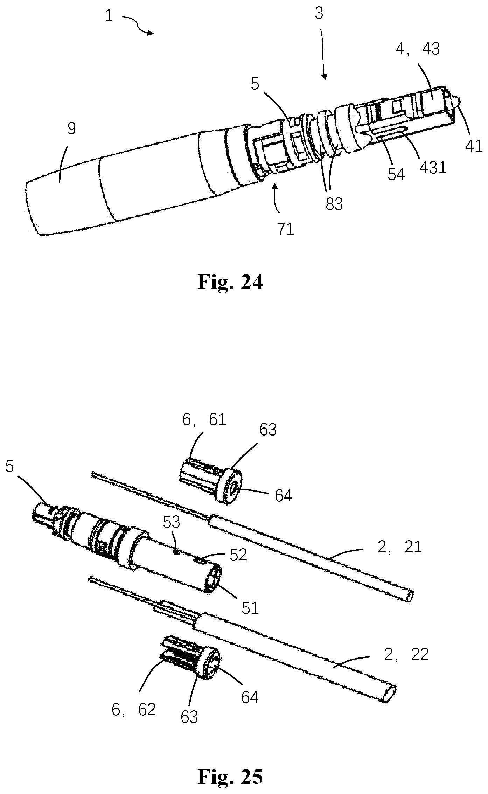

The optical fiber connector 3 may include a ferrule assembly 4 and a connector housing 5, the ferrule assembly 4 is disposed in a head area of the connector housing 5. The optical fiber connector 3 may include an axially penetrating internal passage configured such that the optical fiber (of the optical fiber cable 2) extends through the optical fiber connector 3. Further, the optical fiber connector 3 may include an optical cable fastener 6 when necessary (see Figs. 23 and 25). When mounting the optical fiber connector 3 onto the optical fiber cable 2, for example, the optical fiber cable 2 may be sequentially passed through a tail sleeve 9, the optical cable fastener 6, the connector housing 5 and the ferrule assembly 4. After the optical fiber of the optical fiber cable 2 is inserted and fixed to the ferrule assembly 4, the ferrule assembly 4, the connector housing 5, and the optical cable fastener 6 may be connected and assembled with each other, which will be introduced in detail below in combination with the specific structures of each component of the optical fiber connector 3. Finally, the optical fiber cable assembly 1 shown in Fig. 22 may be obtained by, for example, pushing the tail sleeve 9 onto the optical fiber connector 3 after sealing the optical fiber cable 2 and the optical fiber connector 3 in the tail area of the optical fiber connector 3 by using a heat shrink tube when necessary.

As shown in Fig. 25, in order to adapt to different optical fiber cables 2, the optical fiber connector 3 may have an optical cable fastener 6 matched with the optical fiber cable 2 to be used. The optical fiber cable 2 to be used may be, for example, 5mm round cable, 3mm round cable, 2mm×3mm/2mm×5mm butterfly cable (for example, butterfly cable with metal reinforcement), 4mm×7mm flat cable, 4mm×8mm flat cable, 6mm armored round cable, etc. In Fig. 4, a first optical fiber cable 21 in the form of a 3mm round cable and a second optical fiber cable 22 in the form of a 4×7mm flat cable, as well as a first optical fiber cable fastener 61 and a second optical fiber cable fastener 62 respectively matched therewith are exemplarily shown.

The first optical cable fastener 61 and the second optical cable fastener 62 may respectively have a base 63 and an extension portion 64 extending forward from the base 63 and having a reduced radial dimension with respect to the base 63. Here, the base 63 of the first optical cable fastener 61 and the second optical cable fastener 62 may have the same outer peripheral dimension, and the outer peripheral dimension of the base 63 may be configured such that the base 63 may abut against the tail end 51 of the connector housing 5 in the case where the extension portion 64 is pushed into the tail portion of the connector housing 5. For this purpose, the base 63 may have an outer diameter at least equal to, preferably slightly greater than that of the tail end 51 of the connector housing 5. It is also conceivable that the connector housing 5 has a necked portion in the tail area, and the base 63 may be pushed into the connector housing 5 and abut against the necked portion.

As can be seen from Fig. 25, the first optical cable fastener 61 has a through hole 64 matched with the cross section of the first optical cable 21, while the second optical cable fastener 62 has a through hole 64 matched with the cross section of the second optical cable 22, so that the first optical cable 21 may pass through the first optical cable fastener 61 without any problem, and the second optical cable 22 may pass through the second optical cable fastener 62 without any problem.

In order to retain the optical cable fastener 6 on the connector housing 5, the optical cable fastener 6 may include a latching hook 65, here two radially opposed latching hooks 65. The connector housing 5 may have fitting hole 52 corresponding to the latching hook 65 on the side wall of the tail area. When the extension portion 64 is pushed into the tail portion of the connector housing 5, the latching hook 65 may be clamped into the respective mating hole 52, thereby positioning and retaining the optical cable fastener 6 (and thus the optical fiber cable 2) in the connector housing 5.

In addition, the connector housing 5 may include a glue injection hole 53. Glue liquid may be injected into the connector housing 5 through the glue injection hole 53.

As can be most clearly seen from Fig. 23, in the shown embodiments, the ferrule assembly 4 may include a ferrule 41, a spring 42 and a ferrule housing 43. The ferrule 41 may be particularly a ceramic ferrule and may have an appropriate ferrule end face geometry, for example, an end face geometry of PC, APC, UPC, etc. The ferrule 41 may have an optical fiber hole through which the optical fiber of the optical fiber cable 2 passes. The ferrule 41 may be predominantly housed within the ferrule housing 43, and the front end portion of the ferrule 41 may protrude beyond the front end of the ferrule housing 43 (see Fig. 24). One end of the spring 42 may be supported on the connector housing 5, and the other end of the spring 42 may be supported on the ferrule 41, so that the ferrule 41 may abut against the ferrule housing 43 by way of the spring 42.

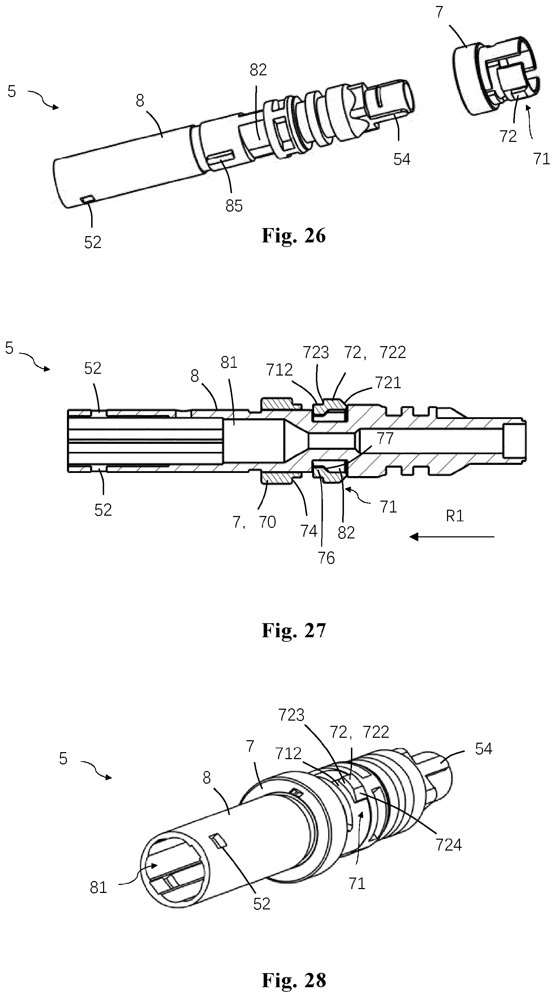

In order to retain the ferrule assembly 4 on the connector housing 5, the ferrule housing 43 may include a connection slot 431 (see Fig. 32) formed in its tail area, and the connector housing 5 may include a connection key 54 (see Figs. 26 and 28) formed in its head area. The connection key 54 and the connection slot 431 may both extend along the axial direction. As shown in Fig. 24, the ferrule housing 43 may be mounted on the connector housing 5 in such a way that the connection key 54 is engaged into the connection slot 431. Only one key-slot pair consisting of one connection slot 431 and one connection key 54 may be provided, or a plurality of key-slot pairs each consisting of one respective connection slot 431 and one respective connection key 54 may be provided. Advantageously, a key-slot pair may be provided on each of the opposed sides.

As can be most clearly seen from Fig. 24, in the case where the ferrule housing 43 is mounted on the connector housing 5, the outer surface of the ferrule housing 43 and the outer surface of the connector housing 5 may smoothly align and transition with each other at least in some areas, preferably over an entire outer periphery. In other embodiments, in the case where the ferrule housing 43 is mounted on the connector housing 5, the connection key 54 may project from the ferrule housing 43. Here, the outer surface of the ferrule housing 43 and the outer surface of the connector housing 5 may smoothly align and transition with each other except for the area where the connection key 54 and the connection slot 431 are engaged with each other.

In the embodiment shown in Figs. 26 to 28, the connector housing 5 may include a connector body 8 having an internal passage 81 (see Figs. 27 and 28) through which the optical fiber extends and a retainer ring 7. The retainer ring 7 may be sleeved on the connector body 8. Here, the entire axial length of the connector housing 5 may be defined by the connector body 8. Therefore, the optical cable fastener 6 previously described may be held in the connector body 8 in the tail area of the connector body 8, while the ferrule assembly 4 previously described may be held in the connector body 8 in the head area of the connector body 8. The retainer ring 7 may be sleeved on the connector body 8 in the middle area of the connector body 8 (i.e., the area between the head area and the tail area of the connector body 8) and thus located between the ferrule assembly 4 and the optical cable fastener 6 in the assembled state of the optical fiber connector 3.

In order to particularly realize the connection of the optical fiber connector 3 with counterpart, such as optical fiber connection port assembly 300, optical fiber coupler, dust cover, fiber optic adapter, etc., as shown in Figs. 26 to 28, the connector housing 5, particularly the retainer ring 7, may include an elastic snap-fit structure 71, particularly two snap-fit structures 71 that are rotationally symmetric about the central axis of the optical fiber connector 3. Only one of the snap-fit structures 71 will be described in detail below, and the corresponding contents are readily applicable to the other of the snap-fit structures 71 and thus will not be repeated. The snap-fit structure 71 is movable from an initial state to a deformed state that is biased inward (i.e., the direction facing towards the internal passage of the optical fiber connector 3 or the central axis of the connector housing 5) with respect to the initial state, and is movable from the deformed state to the initial state under the restoring elasticity. The snap-fit structure 71 may have a latching protrusion 72 projecting outward (i.e., facing away from the internal passage of the optical fiber connector 3 or the central axis of the connector housing 5). For example, as shown in Fig. 8, when inserting the optical fiber connector 3 into the receiving portion 330 of a counterpart, such as the optical fiber connection port assembly 300, the latching protrusions 72 may cooperate with the first locking portion 311 and the second locking portion 321 respectively, so as to lock the optical fiber connection port assembly 300 and the optical fiber connector 3 with each other.

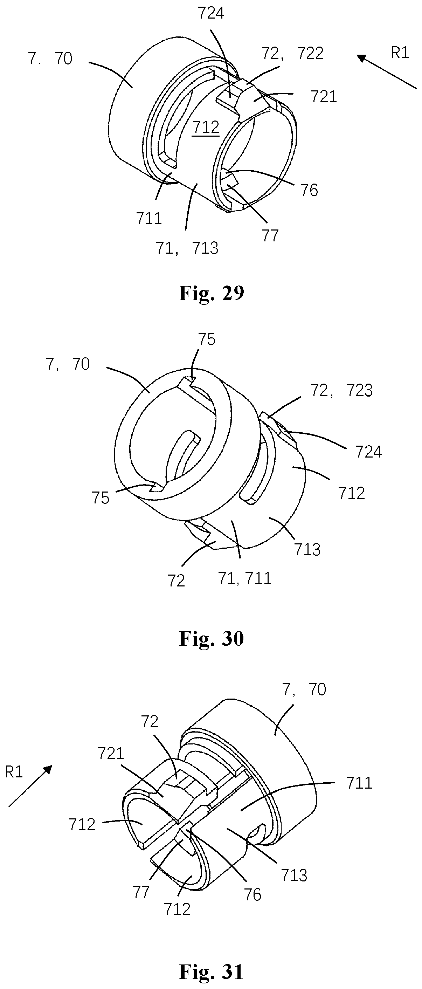

Specifically, as shown in Figs. 29 to 31, the retainer ring 7 may include an annular base 70, with the snap-fit structure 71 extending forward from the base 70. The snap-fit structure 71 may include a first section 711 elongately extending(substantially from the base 70) along the axial direction and a second section 712 elongately extending from the first section 711 along the circumferential direction. The latching protrusion 72 may be formed in an area of the second section 712 remote from the first section 711. Here, due to the elasticity of the material of the retainer ring 7 itself, the second section 712 may function as a sort of elastic arm. Specifically, in the case where an inward force is applied to the area of the second section 712 remote from the first section 711, particularly to the locking protrusion 72, the second section 712 may be biased and deformed inward under the action of the force, substantially with the first section 711 (particularly the transition area 713 between the second section 712 and the first section 711) as an axis or fulcrum, and in the case where the force is withdrawn, the second section will move from the deformed state toward the initial state shown in the figures due to its own elasticity. Advantageously, the first section 711 and the second section 712 may be formed in a plate shape or, in other words, in a thin wall shape, which is beneficial for providing the snap-fit structure 71 with the resilience required. Here, the "thin wall shape" may be particularly understood that the thickness of the first section 711 and the second section 712 is significantly smaller than their planar extension dimension.

Referring to Figs. 27, 29 and 31, the latching protrusion 72 may include a first guide slope 721 that is raised along the first direction R1. Here, the first direction R1 points from the head of the optical fiber connector 3 to the tail of the optical fiber connector. It can be understood that, when connecting the optical fiber connector 3 with the optical fiber connection port assembly 300, the optical fiber connection port assembly 300 generally moves along the first direction R1 with respect to the optical fiber connector 3. The optical fiber connector 3 may be at least partially received in the receiving portion 330 of the optical fiber connection port assembly 300. When the optical fiber connector 3 is pushed into the receiving portion 330 of the optical fiber connection port assembly 300, the first guide slope 721 may be first in contact with, for example, the inner wall of the receiving portion 330, and with the movement of the optical fiber connection port assembly 300 along the first direction R1, the force exerted by the inner wall of the receiving portion 330 onto the first guide slope 721 may cause the snap-fit structure 71, particularly the second section 712 as well as the latching protrusion 72, to be biased inward, so as to allow the snap-fit structure 71 to enter the optical fiber connection port assembly 300. As the optical fiber connection port assembly 300 continues to move along the first direction R1, the latching protrusion 72 may be clamped to the corresponding first locking portion 311 or second locking portion 321 due to the outward resilience of the second section 712, so as to lock the optical fiber connector 3 and the optical fiber connection port assembly 300 with each other.

As can be most clearly seen from Fig. 27, when viewed along the first direction R1, the latching protrusion 72 may include a top 722 that connects to the first guide slope 721. The top 722 here forms the uppermost portion of the latching projection 72, which has the farthest radial distance with respect to the longitudinal axis of the optical fiber connector 3. The latching protrusion 72 may further include a step portion 723 that connects to the top 722 along the first direction R1. The top 722 may descend along the first direction R1 via the step portion 723 and connect to the outer surface of the second section 712. The step portion 723 may form a latching action surface, in the case where the optical fiber connector 3 is held in the optical fiber connection port assembly 300, the latching action surface or the step portion 73 and the corresponding locking surfaces of the first locking portion 311 or the second locking portion 321 of the optical fiber connection port assembly 300 may abut against each other to prevent the optical fiber connector 3 from being pulled out from the optical fiber connection port assembly 300 along the first direction R1.

In order to realize the unlocking of the optical fiber connector 3 and the optical fiber connection port assembly 300, action may be applied to the latching protrusion 72, particularly the first latching protrusion 31 (see Fig. 8) by pressing the operating portion 327 of the optical fiber connection port assembly 300, so that the second section 712 is elastically deformed inward, so as to disengage the first latching protrusion 31 and the first locking portion 311 from each other.

In order to define the position of the retainer ring 7 and the connector body 8 with respect to each other, the connector body may include a positioning rib 85 extending along the axial direction on the outer wall (see Fig. 26), and the retainer ring 7 may include a positioning groove 75 corresponding to the positioning rib 85 on the inner wall, particularly on the inner wall of the base 70 (see Fig. 30). The positioning rib 85 and the positioning groove 75 may cooperate to define the position of the retainer ring 7 and the connector body 8 with respect to each other in the circumferential direction. The positioning rib 85 may have a rounded portion or a sharpened portion at the extremity facing towards the tail of the connector body 8, so as to facilitate inserting the positioning rib 85 into the positioning groove 75.

As shown in Figs. 26 and 27, the connector body 8 may include recess 82 extending along the circumferential direction on the outer wall. In the case where the retainer ring 7 is sleeved on the connector body 8, the second section 712 of the snap-fit structure 71 may be located substantially in the area of the recess 82. Here, the recess 82 may form a free space for the second section 712 of the snap-fit structure 71 to allow the second section 712 to elasticallybias inward. The extension dimension of the recess 82 along the circumferential direction may be adapted to the extension dimension of the second section 712 along the circumferential direction. In the embodiments shown in the figures, one recess 82 may extend along the circumferential direction by an angle of, for example, 120° to 150°.

As shown in Figs. 27 and 31, the snap-fit structure 71 may include a retaining protrusion 76 located on the inner wall of the second section 712. The retaining protrusion 76 may transition to the inner wall of the second section along a second direction opposite to the first direction R1 via a second guide slope 77. The retainer ring 7 may be pushed onto the connector body 8 from the tail of the connector body 8. During this process, the force exerted by the connector body 8 on the second guide slope 77 may slightly stretch the second section 712 of the retainer ring 7. After the positioning rib 85 of the connector body 8 is inserted into the positioning groove 75 of the retainer ring 7, as the retainer ring 7 continues to be pushed forward, the second section 712 may spring back inward in the area of the recess 82 of the connector body 8. Here, the retaining protrusion 76 and the recess 82 may cooperate to define the position of the retainer ring 7 and the connector body 8 with respect to each other along an axial direction, particularly to prevent the retainer ring 7 from moving in the first direction R1 relative to the connector body 8. Further, the front end of the retainer ring 7 may abut against the flange of the connector body 8, so as to prevent the retainer ring 7 from being further pushed forward. In the embodiments shown in the figures, the retaining protrusion 76 may be located at a position corresponding to the latching protrusion 72 with respect to the second section 712. That is, the retaining protrusion 76 and the latching protrusion 72 may both be located in the free end area of the second section 712 remote from the first section 711.

It can be understood that, without limitation to the two-piece structure of the connector housing 5 described above, the connector body 8 and the retainer ring 7 may be integrally formed with each other, so as to constitute a one-piece connector housing 5. The details described above for the connector body 8 and the retainer ring 7 may be applied to the one-piece connector housing 5 accordingly.

As shown in Fig. 24, the optical fiber connector 3, particularly the connector body 8, may further include at least one annular groove 83 located between the snap-fit structure 71 and the head of the optical fiber connector 3, particularly the ferrule assembly 4, sealing ring 84 may be provided in the annular groove 83 (see Fig. 2). The sealing ring 84 may be used to seal between the optical fiber connector 3 and the optical fiber connection port assembly 300.

In some embodiments, the plug 600 for the fiber optic splice closure 500 may have a similar structure, in particular the same snap-fit structure as that of the optical fiber connector 3. In some embodiments, the plug 600 may have the retainer ring 7 of the optical fiber connector 3 as shown in Figs. 29 to 30. Thus, the plug 600 may be mounted in the optical fiber connection port assembly 300 of the fiber optic splice closure 500 in a similar manner to the optical fiber connector 3.

In addition, in some embodiments, in order to define an axial position of the optical fiber connector 3 in the optical fiber connection port assembly 300, as shown in Figs. 32 and 33, the ferrule housing 43 of the optical fiber connector 3 may have a limiting step portion 433. When the optical fiber connector 3 is pushed into the optical fiber connection port assembly 300, the push-in depth of the optical fiber connector 3 may be limited by the limiting step portion 433 abutting against a corresponding limiting stop portion 358 of the fiber optic adapter 350.

It may be understood that, the optical fiber cable assembly 1 and its optical fiber connector 3, which may be adapted to the optical fiber connection port assembly 300 and/or the optical fiber communication device, for example, the fiber optic splice closure 500, of the present application, are not limited to the embodiments exemplarily shown in the figures, but may have diversified configurations. For example, in some embodiments not shown, the first latching protrusion and the second latching protrusion of the optical fiber connector may be formed as two elastic pins which are radially opposed to each other, which may project radially outward from the connector body and may be preloaded in an outwardly projecting state, for example, by way of an elastic member, such as a spring. In the outwardly projecting state, the elastic pin may be clamped with the first locking portion and the second locking portion of the optical fiber connection port assembly respectively. For example, in the case of pressing the operating portion of the optical fiber connection port assembly, the unlocking action portion may act on the corresponding elastic pin and cause the elastic pin to retract radially inward against the elastic force of the spring. Of course, the second locking portion also moves away from the other elastic pin during this process, so as to realize the unlocking of the optical fiber connector from the optical fiber connection port assembly.

Although the exemplary embodiments of the present application have been described, those skilled in the art should understand that, multiple changes and modifications may be made to the exemplary embodiments of the present application without substantively departing from the spirit and scope of the present application. Accordingly, all the changes and modifications are encompassed within the protection scope of the present application.

## Claims

1. An optical fiber connection port assembly, wherein the optical fiber connection port assembly comprises a connection port housing and a locking member, wherein the connection port housing and the locking member together define at least a portion of a receiving portion for receiving an optical fiber connector,
wherein the connection port housing includes a first locking portion for a first latching protrusion of the optical fiber connector, and the locking member includes a second locking portion for a second latching protrusion of the optical fiber connector and an unlocking action portion for the first latching protrusion of the optical fiber connector,
wherein the locking member is transitionable between a lock state and an unlock state, wherein compared with the lock state, in the unlock state, the second locking portion of the locking member is remote from the receiving portion, and the unlocking action portion of the locking member is proximate to the receiving portion.

2. The optical fiber connection port assembly according to claim 1, wherein the optical fiber connection port assembly is configured to allow the optical fiber connector to be inserted into the receiving portion of the optical fiber connection port assembly along an insertion direction.

3. The optical fiber connection port assembly according to claim 2, wherein in the lock state, the optical fiber connection port assembly prevents the movement of the optical fiber connector located in the receiving portion against the insertion direction; and in the unlock state, the optical fiber connection port assembly allows the movement of the optical fiber connector located in the receiving portion against the insertion direction.

4. The optical fiber connection port assembly according to any one of claims 1 to 3, wherein the first locking portion is configured to, in the lock state, interact with the first latching protrusion of the optical fiber connector located in the receiving portion, and the second locking portion is configured to, in the lock state, interact with the second latching protrusion of the optical fiber connector located in the receiving portion.

5. The optical fiber connection port assembly according to any one of claims 1 to 4, wherein the unlocking action portion of the locking member is configured to, in the unlock state, act on the first latching protrusion of the optical fiber connector located in the receiving portion, so that the first latching protrusion is unlatched from the first locking portion.

6. The optical fiber connection port assembly according to any one of claims 1 to 5, wherein the second locking portion of the locking member is configured to, in the unlock state, leave the second latching protrusion of the optical fiber connector located in the receiving portion, so that the second latching protrusion is unlatched from the second locking portion.

7. The optical fiber connection port assembly according to any one of claims 1 to 6, wherein the locking member includes an operating portion projecting outwards in the area of the unlocking action portion, wherein the locking member is transitionable from the lock state to the unlock state by pressing the operating portion.

8. The optical fiber connection port assembly according to any one of claims 1 to 7, wherein the second locking portion and the unlocking action portion are opposite to each other in an unlocking movement direction of the locking member, wherein the locking member is transitionable from the lock state to the unlock state along the unlocking movement direction.

9. The optical fiber connection port assembly according to any one of claims 1 to 8, wherein the locking member includes an environ portion which at least partially defines the receiving portion, wherein the environ portion includes a first section in the shape of a semi-cylindrical shell comprising the second locking portion and a second section comprising the unlocking action portion, wherein the first section and the second section together form the environ portion.

10. The optical fiber connection port assembly according to claim 9, wherein the distance between the second locking portion and the central axis of the receiving portion is smaller than the distance between the unlocking action portion and the central axis of the receiving portion.

11. The optical fiber connection port assembly according to claim 9 or 10, wherein the distance between the second locking portion and the central axis of the receiving portion corresponds to the distance between the first locking portion and the central axis of the receiving portion.

12. The optical fiber connection port assembly according to any one of claims 1 to 11, wherein the locking member is at least partially elastic, wherein the locking member is elastically deformable from the lock state to the unlock state, and is transitionable from the unlock state to the lock state under the action of the restoring elastic force.

13. The optical fiber connection port assembly according to claim 12, wherein the locking member includes elastic arm extending in the axial direction, wherein the elastic arm is connected to the environ portion.

14. The optical fiber connection port assembly according to claim 13, wherein the elastic arm is connected to the second section of the environ portion.

15. The optical fiber connection port assembly according to claim 13 or 14, wherein the connection port housing includes support portion for the elastic arm.

16. The optical fiber connection port assembly according to any one of claims 13 to 15, wherein the locking member includes a positioning cutout, and wherein the connection port housing includes a positioning projection corresponding to the positioning cutout.

17. The optical fiber connection port assembly according to any one of claims 13 to 16, wherein the locking member includes guide pin, and wherein the connection port housing includes guide hole corresponding to the guide pin.

18. The optical fiber connection port assembly according to any one of claims 13 to 17, wherein the connection port housing includes a yielding opening for at least a portion of the first section of the locking member.

19. The optical fiber connection port assembly according to claim 12, wherein the locking member has an elastic arch projecting outward in the area of the second locking portion, wherein the elastic arch is supported on the inner wall of the connection port housing.

20. The optical fiber connection port assembly according to any one of claims 1 to 11, wherein the optical fiber connection port assembly comprises spring arranged between the connection port housing and the locking member, wherein the spring maintains the locking member in the lock state.

21. The optical fiber connection port assembly according to any one of claims 1 to 20, wherein the optical fiber connection port assembly comprises a fiber optic adapter at least partially located in the connection port housing.

22. The optical fiber connection port assembly according to claim 21, wherein, viewed in an axial direction, the first locking portion, the second locking portion and the unlocking action portion are located between the fiber optic adapter and an inlet of the optical fiber connection port assembly.

23. The optical fiber connection port assembly according to claim 21 or 22, wherein the fiber optic adapter, the connection port housing and the locking member together define the receiving portion for receiving the optical fiber connector, wherein the fiber optic adapter includes a section for defining the circumferential relative orientation of the optical fiber connector with respect to the optical fiber connection port assembly, wherein the shape of the section is matched with the shape of a corresponding section of the optical fiber connector.

24. An optical fiber communication device, wherein the optical fiber communication device includes at least one optical fiber connection port assembly according to any one of claims 1 to 23.

25. The optical fiber communication device according to claim 24, wherein the operating portion of the optical fiber connection port assembly is exposed from a housing of the optical fiber communication device, such that the operation to the operating portion from the outside of the optical fiber communication device is possible.

26. The optical fiber communication device according to claim 24 or 25, wherein the optical fiber communication device is a splice closure including a splice closure housing and a plurality of optical fiber connection port assemblies arranged in the splice closure housing.

27. The optical fiber communication device according to claim 26, wherein the splice closure housing includes a housing cover and a housing main body, wherein the housing main body includes a first partition wall dividing an inner space of the splice closure housing into a first space and a second space, wherein the connection port housing and the locking member of the optical fiber connection port assembly are arranged in the first space, wherein a fiber connection panel is arranged in the second space.

28. The optical fiber communication device according to claim 27, wherein the first partition wall includes communication hole communicating the first space and the second space, wherein the fiber optic adapter of the optical fiber connection port assembly passes through the communication hole.

29. The optical fiber communication device according to claim 28, wherein a sealing ring is provided between the fiber optic adapter and the communication hole.

30. The optical fiber communication device according to any one of claims 27 to 29, wherein the housing main body includes a housing bracket and a panel, wherein the panel defines connection entrance for the optical fiber connector.

31. The optical fiber communication device according to claim 30, wherein the housing cover includes first retaining hook projecting into the first space, and wherein the panel includes second retaining hook for cooperating with the first retaining hook.

32. The optical fiber communication device according to claim 31, wherein an axial position of the connection port housing in the optical fiber communication device is defined by the first retaining hook and the first partition wall.

33. The optical fiber communication device according to any one of claims 27 to 32, wherein the housing cover and the housing main body are fixed with respect to each other by way of high-frequency induction welding.

34. The optical fiber communication device according to claims 27 to 33, wherein the splice closure comprises at least two rows of optical fiber connection port assemblies stacked on top of each other.

35. The optical fiber communication device according to claim 34, wherein the splice closure housing includes second partition wall configured to partition two adjacent rows of optical fiber connection port assemblies from each other.

36. The optical fiber communication device according to claim 34 or 35, wherein the splice closure includes a first housing cover and a second housing cover as the housing cover.

37. The optical fiber communication device according to any one of claims 24 to 36, wherein the optical fiber communication device comprisesplug for the optical fiber connection port assembly, wherein the plug includes the first latching protrusion and the second latching protrusion.

38. An optical fiber communication system, wherein the optical fiber communication system includes an optical fiber communication device according to any one of claims 24 to 37 and an optical fiber cable assembly, wherein the optical fiber cable assembly includes an optical fiber cable and an optical fiber connector, wherein the optical fiber connector includes the first latching projection and the second latching projection.

39. The optical fiber communication system according to claim 38, wherein the first latching projection and the second latching projection of the optical fiber connector are opposed to each other along the radial direction.

40. The optical fiber communication system according to claim 38 or 39, wherein the optical fiber connector includes two elastic snap-fit structures movable from an initial state to a deformed state which is biased inward with respect to the initial state, and movable from the deformed state to the initial state under the action of the restoring elastic force, wherein one snap-fit structure comprises the first latching protrusion projecting outward, and the other snap-fit structure comprises the second latching protrusion projecting outward.

41. The optical fiber communication system according to claim 40, wherein the two snap-fit structures are rotationally symmetrical to each other about the central axis of the optical fiber connector.

42. The optical fiber communication system according to claim 40 or 41, wherein the snap-fit structure includes a first section extending along an axial direction and a second section extending from the first section along a circumferential direction, wherein the latching protrusion is formed in an area of the second section remote from the first section.

43. The optical fiber communication system according to claim 42, wherein the first section and the second section are formed in a plate shape.

44. The optical fiber communication system according to any one of claims 38 to 43, wherein the latching protrusion includes a first guide slope raised in a first direction, wherein the first direction is directed from the head of the optical fiber connector to the tail of the optical fiber connector.

45. The optical fiber communication system according to claim 44, wherein, viewed along the first direction, the latching protrusion sequentially includes a top connecting to the first guide slope and a step portion forming a latching action surface.

46. The optical fiber communication system according to any one of claims 40 to 45, wherein the connector housing includes a connector body with an internal passage and a retainer ring with the snap-fit structure, wherein the retainer ring is sleeved on the connector body, wherein the internal passage is configured for optical fiber to extend through the optical fiber connector.

47. The optical fiber communication system according to claim 46, wherein the retainer ring includes an annular base, wherein the snap-fit structure connecting to the base.

48. The optical fiber communication system according to claim 46 or 47, wherein the connector body includes a positioning rib extending along the axial direction on the outer wall, and the retainer ring includes a positioning groove corresponding to the positioning rib on the inner wall, wherein the positioning rib and the positioning groove cooperate to define the positions of the retainer ring with respect to the connector body along the circumferential direction.

49. The optical fiber communication system according to any one of claims 46 to 48, wherein the connector body includes a recess extending along the circumferential direction on the outer wall, wherein in the case where the retainer ring is sleeved on the connector body, the second section of the snap-fit structure is located in the area of the recess, wherein the recess forms a free space for the second section of the snap-fit structure.

50. The optical fiber communication system according to claim 49, wherein the snap-fit structure includes a retaining protrusion located on the inner wall of the second section, wherein in the case where the retainer ring is sleeved on the connector body, the retaining protrusion and the recess cooperate to define the positions of the retainer ring with respect to the connector body along the axial direction.

51. The optical fiber communication system according to claim 50, wherein the retaining protrusion transitions, along a second direction, to the inner wall of the second section by way of a second guide slope, wherein the second direction is directed from the tail of the optical fiber connector to the head of the optical fiber connector.

52. The optical fiber communication system according to claim 50 or 51, wherein the retaining protrusion is located at a position corresponding to the latching protrusion.

53. The optical fiber communication system according to any one of claims 40 to 52, wherein the optical fiber connector includes at least one annular groove located between the snap-fit structure and the head of the optical fiber connector, wherein sealing ring is provided in the annular groove.

54. The optical fiber communication system according to any one of claims 40 to 53, wherein the optical fiber connector includes a ferrule assembly including ferrule, spring and ferrule housing, wherein the ferrule abuts against the ferrule housing via the spring and protrudes from the front end of the ferrule housing.

55. The optical fiber communication system according to claim 54, wherein the ferrule housing includes connection slot formed in the tail area thereof, and wherein the connector housing includes connection key formed in the head area thereof, wherein the ferrule housing is mounted on the connector housing in such a manner that the connection key is engaged in the connection slot.

56. The optical fiber communication system according to claim 55, wherein the connection key and the connection slot extend along the axial direction.

57. The optical fiber communication system according to any one of claims 54 to 56, wherein the ferrule housing comprises chamfer extending from its front end to back end.

58. The optical fiber communication system according to claim 57, wherein the ferrule housing, at least in the front area thereof, comprises a rectangular outer cross section, wherein the chamfer is formed on at least one edge of the ferrule housing.

59. The optical fiber communication system according to claim 57 or 58, wherein the chamfer extends over a portion of the length of the ferrule housing.

60. The optical fiber communication system according to any one of claims 54 to 59, wherein in the case where the ferrule housing is mounted on the connector housing, the outer surface of the ferrule housing and the outer surface of the connector housing smoothly align with each other at least in some areas.

61. The optical fiber communication system according to any one of claims 55 to 60, wherein in the case where the ferrule housing is mounted on the connector housing, the outer surface of the ferrule housing and the outer surface of the connector housing smoothly align with each other, except for the area of the connection key and the connection slot.

62. The optical fiber communication system according to any one of claims 38 to 61, wherein the optical fiber connector includes an optical cable fastener and/or the optical fiber cable assembly includes a tail sleeve.
